# EUROPÄISCHE PATENTSCHRIFT

(11) **EP 0 341 392 B1**
(45) Veröffentlichungstag und Bekanntmachung des Hinweises auf die Patenterteilung: **23.06.1993**
(21) Anmeldenummer: 89104330.9
(22) Anmeldetag: 11.03.1989
(51) Int. Cl.: F16D 55/224, F16D 55/02, F16D 65/02, F16D 65/16

(54) **Teilbelag-Scheibenbremse**
Spot-type disc brake
Frein à disque à garniture partielle

(30) Priorität: 07.05.1988 DE 3815733
(43) Veröffentlichungstag der Anmeldung: 15.11.1989
(73) Patentinhaber: ALFRED TEVES GmbH, 60441 Frankfurt (DE); Volkswagen Aktiengesellschaft, 38436 Wolfsburg (DE)
(72) Erfinder: Weiler, Rolf, D-6239 Eppstein 2 (DE); Schiel, Wolfgang, D-6230 Frankfurt/Main 80 (DE); Bretzler, Rainer, D-6239 Eppstein 2 (DE)
(74) Vertreter: Portwich, Peter

(56) Entgegenhaltungen:
- DE-A- 3 346 478
- DE-C- 2 804 808
- DE-C- 2 916 244
- DE-C- 2 926 818
- FR-A- 2 218 789
- GB-B- 2 114 243
- GB-B- 2 147 376
- US-A- 4 171 037
- US-A- 4 392 559
- US-A- 4 410 068
- US-A- 4 410 069

## Beschreibung

Die Erfindung betrifft eine Teilbelag-Scheibenbremse, insbesondere für Kraftfahrzeuge, mit einem Gehäuse, das eine Bremsscheibe U-förmig umgreift und das eine Gehäusebrücke, einen ersten eine Kolbenzylindereinheit aufweisenden Gehäuseschenkel und einen zweiten äußeren Gehäuseschenkei aufweist, mit einer ersten eine Trägerplatte aufweisenden Bremsbacke, die an dem ersten kolbenseitigen Schenkel angeordnet ist, einer zweiten eine Trägerplatte aufweisenden Bremsbacke, die an dem zweiten äußeren Schenkel angeordnet ist und das Gehäuse in bezug zur Bremsscheibenachse in radialer Richtung abstützt und mit Vorsprüngen an der Trägerplatte, die die Bremsbacke in radialer und in Umfangsrichtung abstützt, gemäß dem Oberbegriff des Anspruches 1.

Aus der DE-A-28 04 808 (Anspruch 1) ist eine Bremsbackenhalterung für eine Teilbelagscheibenbremse, insbesondere für Kraftfahrzeuge mit zwei in Sekantenrichtung zur Bremsscheibe im Abstand voneinander angeordneten Tragteilen mit einer an den Tragteilen in Bremsanlagerichtung verschiebbar geführten Bremsbacke bekannt, die in Umfangsrichtung der Bremsscheibe derart formschlüssig mit den Tragteilen verbunden ist, das zumindest bei höheren Bremsanlagekräften, die an der Bremsbacke auftretende Reibungskraft auf beide Tragteile übertragen wird. Nachteilig weist diese Schwimmsattel-Teilbelag-Scheibenbremse einen am Achsschenkel eines Kraftfahrzeuges zu befestigenden, eine Bremsscheibe U-förmig umgreifenden Bremsträger auf.

Aus der GB-B-2,147,376 ist eine gattungsgemäße Scheibenbremse bekannt, bei der die Trägerplatten der Bremsbacken auf der Rückseite mit Federn zur Halterung der Bremsbacken versehen sind. Dabei ist die kolbenseitige Bremsbacke mit einer zum Eingriff in einen hohlen Bremskolben bestimmten Feder 15 ausgestattet, deren Gestalt mit drei Federarmen an die funktionellen Erfordernisse angepaßt ist. Die äußere Bremsbacke 14 hingegen weist eine zweiarmige Feder 16 auf, deren Gestalt zur Befestigung an einem äußeren Gehäuseschenkel geeignet und an dieses Erfordernis angepaßt ist. Für die Fertigung und Lagerhaltung dieser zwei verschiedenen Bremsbacken ist ein erheblicher Aufwand erforderlich.

Der Erfindung liegt die Aufgabe zugrunde, eine Teilbelag-Scheibenbremse zu vereinfachen, den Fertigungsaufwand zu reduzieren und eine einfache Montage einer solchen Teilbelag-Scheibenbremse zu gewährleisten.

Diese Aufgabe wird gemäß den Merkmalen des Anspruches 1 gelöst. Beide Bremsbacken und ihre Federn sind gleich ausgeführt und damit austauschbar. Mit Vorteil müssen Fertigungswerkzeuge nur für eine Bremsbacke bereitgestellt werden und die Lagerhaltungskosten werden reduziert.

Bevorzugte Ausgestaltungsformen der Feder und des äußeren Gehäuseschenkels, die eine einfache Montage und eine funktionelle Befestigung sowohl der kolbenseitigen als auch der äußeren Bremsbacke gewährleisten, ergeben sich aus den Ansprüchen 2 und 3.

In einer einfachen Ausgestaltung der Erfindung gemäß Anspruch 4 weist der Vorsprung eine L-Form auf, wobei ein erster Schenkel des L sich mit einer ersten Fläche in Umfangsrichtung abstützt und ein zweiter Schenkel des L sich mit einer zweiten Fläche in radialer Richtung abstützt. Nach Einbau der Teilbelag-Scheibenbremse kommt damit die Bremsbacke mit ihren zwei L-förmigen Vorsprüngen in Anlage an die Tragarme des integrierten Achsschenkels, die somit bei Bremsbetätigung Umfangs- und radiale Kräfte direkt auf die starren Teile der Karosserie weiterleiten.

Eine andere vorteilhafte Ausgestaltung gemäß Anspruch 5 sieht eine Nut in dem Vorsprung vor, die die Trägerplatte in radialer und in beiden Umfangsrichtungen abstützt. Dabei wird ein Push-Pull-Prinzip verwirklicht, weil die Umfangskraft bei schwacher Bremsbetätigung zunächst auf einen der Tragarme (Push, drücken) und danach bei starker Bremsbetätigung und damit verbundener Aufweitung der Tragarme auf den anderen Tragarm (Pull, ziehen) des integrierten Achsschenkels verteilt ist.

In vorteilhafter Weise weist der Vorsprung eine Schräge gemäß Anspruch 6 auf, damit die Bremsbacke die Möglichkeit einer Bewegung zwischen Belagträger und Achsschenkel bekommt, um Korrosionsprobleme auszuschalten. Bei jedem Bremsvorgang gleitet die Bremsbacke an der Schräge radial und in Drehrichtung der Bremsscheibe nach außen, so daß sich die Bremsbacke von eventueller Korrosion bzw. Korrosionsbrücken freischaukelt.

Nachfolgend sind vorteilhafte Ausführungsbeispiele der Erfindung anhand von Zeichnungen näher erläutert.

Es zeigen
- Fig. 1: eine Teilbelag-Scheibenbremse mit Dreipunkt-Auflage,
- Fig. 2: dieselbe Teilbelag-Scheibenbremse in geschnittener Seitenansicht,
- Fig. 3: die Teilbelag-Scheibenbremse in einer weiteren teilweise geschnittenen Seitenansicht,
- Fig. 4: einen Punkt der Dreipunkt-Auflage zwischen Gehäuse und Bremsbacke,
- Fig. 5: eine Schräge zwischen Bremsbacke und integrierten Achsschenkel,
- Fig. 6: eine zweite Teilbelag-Scheibenbremse in Draufsicht mit Vierpunkt-Auflage,
- Fig. 7: die Teilbelag-Scheibenbremse in geschnittener Seitenansicht und
- Fig. 8: die Teilbelag-Scheibenbremse in einer weiteren teilweise geschnittenen Seitenansicht.

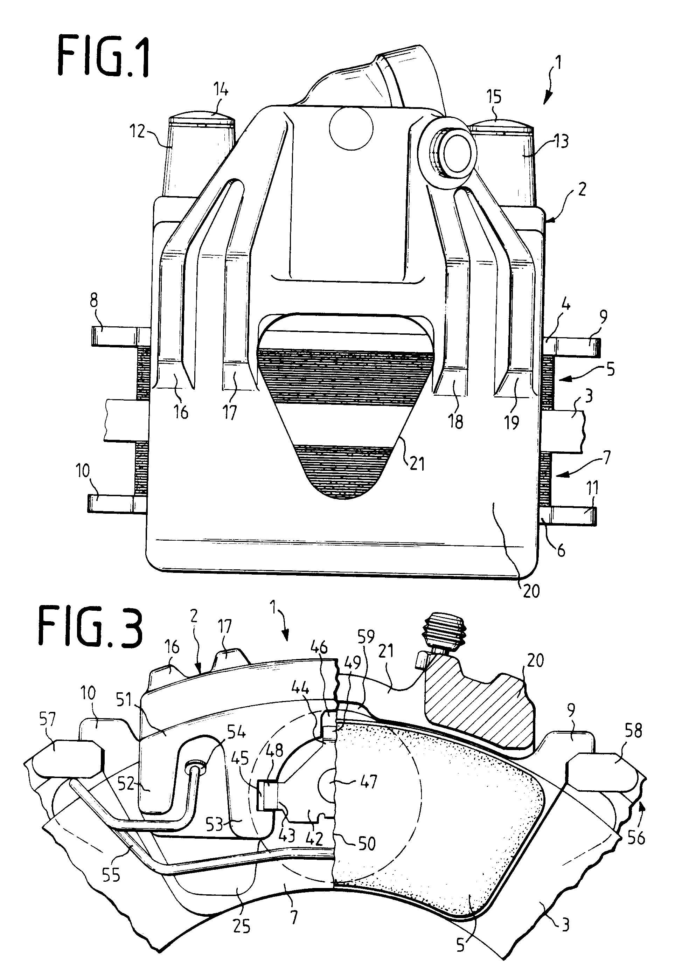

Fig. 1 zeigt eine Schwimmsattel-Teilbelag-Scheibenbremse 1 insbesondere für Kraftfahrzeuge mit einem Gehäuse 2, das eine Bremsscheibe 3 U-förmig umgreift, mit einer ersten eine Trägerplatte 4 aufweisenden Bremsbacke 5 und einer zweiten eine zweite Trägerplatte 6 aufweisenden Bremsbacke 7. Die Trägerplatte 4 der Bremsbacke 5 weist zwei in Umfangsrichtung an den äußersten Enden versetzt, in bezug zur Bremsscheibenachse in radialer Richtung außen angeordnete Vorsprünge 8,9 auf. Die zweite äußere Bremsbacke 7 weist an ihrer Trägerplatte 6 ebensolche Vorsprünge 10,11 auf. Zur Befestigung der Teilbelag-Scheibenbremse 1 an den Achsschenkeln 56 sind Federglieder 12,13, auch Bushings genannt, mit Verschlußkappen 14,15 vorgesehen. Das Gehäuse 2 weist Verstärkungsrippen 16-19 auf, die sich im wesentlichen in axialer Richtung erstrecken. Eine Gehäusebrücke 20 weist einen Schacht 21 auf.

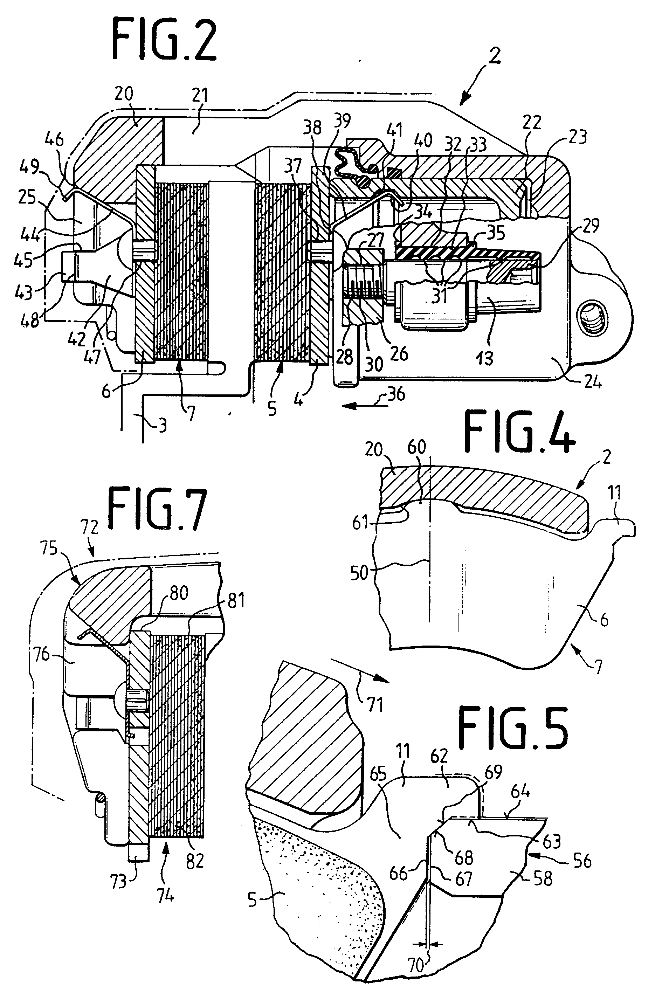

Fig. 2 zeigt die Teilbelag-Scheibenbremse 1 mit dem U-förmigen Gehäuse 2, das die Bremsscheibe 3 umgreift und das die Gehäusebrücke 20, einen ersten, eine Kolbenzylindereinheit 22,23 aus Kolben 22 und Zylinder 23 aufweisenden Gehäuseschenkel 24 und einen weiteren äußeren Gehäuseschenkel 25 aufweist. An dem kolbenseitigen Schenkel 24 ist die Bremsbacke 5 und an dem äußeren Schenkel 25 die Bremsbacke 7 angeordnet. Anstelle eines Bremsträgers ist ein integrierter Achsschenkel 26 vorgesehen, der starr und ortsfest mit der Karosserie verbunden ist. Der Achsschenkel 26 weist eine Bohrung 27 mit Gewinde 28 auf, in dem ein Bolzen 29 mit Gewinde 30 verschraubt ist. Der Bolzen 29 steckt in einem zylinderförmigen Bushing 13, das mit ringförmigen Rippen 31 auf der Bolzenoberfläche anliegt. Das Bushing 13 ist durch eine Bohrung 32 des Gehäuses 2 gehalten und liegt mit seiner äußeren zylindrischen Mantelfläche 33 an der Innenwand dieser Bohrung 32 an. Vorsprünge 34,35 hindern das Bushing, aus dieser Bohrung 32 herauszugleiten. Bei Bremsbetätigung wird ein hydraulisches Medium, im folgenden Bremsflüssigkeit genannt, in den Zylinder 23 gepumpt, so daß der Kolben 22 in Richtung 36 bewegt wird. Dabei wird die Bremsbacke 5 gegen die Bremsscheibe 3 bewegt und über eine Reaktionskraft die Bremsbacke 7 gegen die andere Seite der Bremsscheibe 3 gedrückt. Bei der Bremsbetätigung gleitet das Gehäuse 2 mit dem Bushing 13 auf dem Bolzen 29. Ein Niet 37, der in der Trägerplatte 4 der Bremsbacke 5 vernietet ist, hält eine Feder 38 mit drei Federarmen 39 (nur der eine Federarm ist hier sichtbar), die mit gebogenen Federarmabschnitten 40 in eine ringförmig umlaufende Nut 41 des Kolbens 22 eingreift. Eine weitere Feder 42 greift mit drei Federarmen 43,44 (nur zwei der Federarme sind hier sichtbar) in Nuten 45,46 und verklemmt die äußere Bremsbacke 7 am äußeren Gehäuseschenkel 25. Die Feder 42 ist durch einen Niet 47 an der Trägerplatte 6 der Bremsbacke 7 befestigt.

Sowohl die Bremsbacken 5,7 als auch die Federn 38,42 und die Befestigung 37,47 zwischen Feder 38,42 und Bremsbacke 5,7 sind gleich.

Fig. 3 zeigt die Teilbelag-Scheibenbremse mit dem teilweise geschnittenen Gehäuse 2, das die Bremsscheibe 3 umgreift, mit den Bremsbacken 5,7 den Verstärkungsrippen 16,17 dem Schacht 21 und dem äußeren Gehäuseschenkel 25. Die dreieckförmige Feder 42 ist symmetrisch zu einer radialen Schnittlinie 50. Die Feder weist zwei senkrecht von der Schnittlinie 50 wegragende Federarme 43 auf (von denen hier nur der eine Federarm 43 aufgrund der Schnittdarstellung sichtbar ist). Parallel zu der Schnittlinie 50 erstreckt sich der Arm 44. Die Federarme 43,44 ragen mit ihren gebogenen Federarmabschnitten 48,49 in die drei Nuten 45,46, von denen hier nur die Nuten 45,46 aufgrund der Schnittdarstellung sichtbar sind. Der Gehäuseschenkel 25 weist eine sich in Umfangsrichtung erstreckende Verstärkungsrippe 51 und nahtlos daran angepaßt vier sich in radialer Richtung erstreckende Rippen 52,53 auf (von denen hier nur die beiden Rippen 52,53 aufgrund der Schnittdarstellung sichtbar sind). Der Achsschenkel 25 des Gehäuses 2 weist zwei Öffnungen 54 auf, in die eine Drahtfeder 55 hineinragt, die das Gehäuse 2 gegen einen integrierten Achsschenkel 56 an dessen Tragarmen 57,58 verspannt. Der integrierte Achsschenkel 56 ist starr und ortsfest an der Fahrzeugkarosserie angeordnet. Beide Bremsbacken 5,7 sind mit ihren Vorsprüngen 8 bis 11 an diesen Tragarmen 57,58 abgestützt. Die Bremsbacke 5 weist einen halbmondförmigen Vorsprung 59 auf, der in den Schacht 20 des Gehäuses 2 ragt.

Fig. 4 zeigt einen dritten Abstützpunkt des Sattelgehäuses 2 über die äußere Bremsbacke 7 an den integrierten Achsschenkel 56. Die ersten beiden Abstützpunkte des Gehäuses 2 sind die zwei symmetrisch zur Schnittlinie 50 angeordneten Bolzen 29. Die Trägerplatte 6 weist mittig zur Umfangsrichtung und radial außen einen halbmondförmigen Vorsprung 60 auf, der in eine geeignete Ausnehmung 61 der Gehäusebrücke 20 ragt. Die Feder 55 verspannt das Gehäuse 2 über dessen Ausnehmung 61, den Vorsprung 60 und über die Vorsprünge 10 und 11 an dem Achsschenkel 56. Da der Vorsprung 60 und die Ausnehmung 61 mittig angeordnet sind, ist der Sattel mit einer Dreipunkt-Auflage gelagert.

Fig. 5 zeigt die Lagerung der Bremsbacke 5 über den Vorsprung 11 an dem Tragarm 58 des integrierten Achsschenkels 56. Der Vorsprung 11 weist im wesentlichen eine L-Form auf, wobei sich ein erster Schenkel 62 mit seiner Fläche 63 auf der Fläche 64 des Tragarmes 58 in in wesentlicher radialer Richtung abstützt. Der zweite Schenkel 65 stützt sich mit seiner Fläche 66 an einer Fläche 67 des Tragarmes 58 in in wesentlicher Umfangsrichtung 71 ab. Die Flächen 63 und 64 sind senkrecht zu den Flächen 66,67 angeordnet. Zwischen diesen Flächen 63 und 67 des Tragarmes 58 erstreckt sich eine schräge Fläche 68, die mit einer schrägen Fläche 69 zwischen den Flächen 64 und 66 des Vorsprunges 11 zusammenwirkt. Ein Spiel 70 zwischen den Flächen 66 der Bremsbacke 5 und 67 des Tragarmes 58 wird bei Bremsbetätigung überwunden, so daß die Bremsbacke 5 an ihrer Schräge 69 auf dem Tragarm 58 hinaufgleitet und damit die gestrichelt gezeigte Endstellung einnimmt. Durch dieses Hinaufgleiten werden Korrosionsprobleme überwunden. Dabei ist von einer Drehrichtung 71 der Bremsscheibe 3 ausgegangen. Vorteilhaft sind die Bremsbacken 5 und 7 identisch und die Vorsprünge 8 und 9 bzw. 10 und 11 spiegelsymmetrisch zu der Schnittlinie 50.

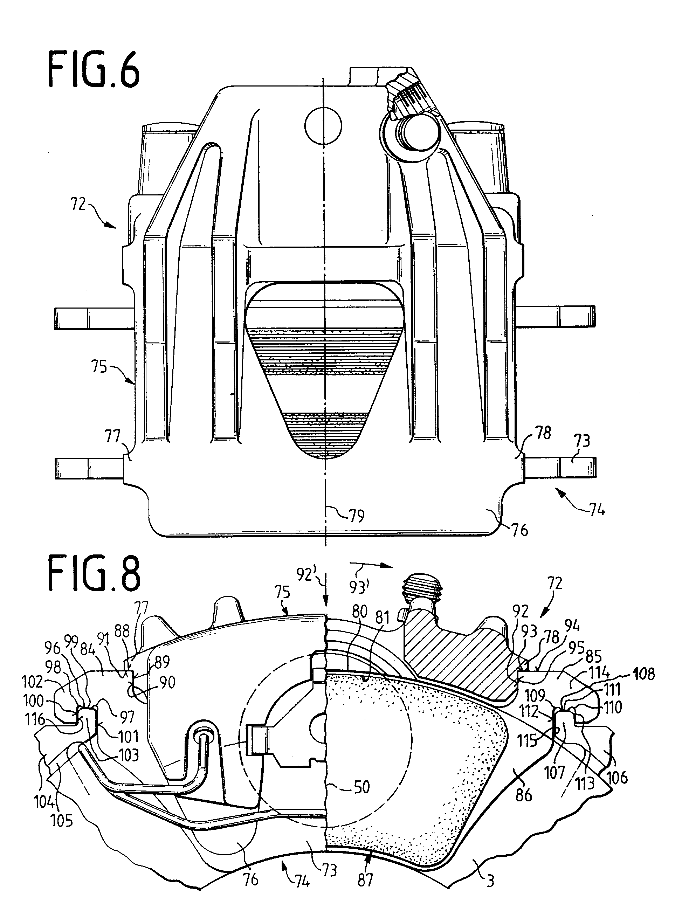

Fig. 6 zeigt eine zweite Schwimmsattel-Teilbelag-Scheibenbremse 72, die in Vierpunkt-Auflage über eine Trägerplatte 73 einer äußeren Bremsbacke 74 über zwei Abstützpunkte gelagert ist. Dazu weist das Gehäuse 75 in Höhe des äußeren Gehäuseschenkels 76 zwei Vorsprünge 77 und 78 auf.

Fig. 7 zeigt die zweite Teilbelag-Scheibenbremse 72 mit dem Gehäuse 75 und dem Gehäuseschenkel 76. Die Trägerplatte 73 der Bremsbacke 74 weist eine obere radiale außenliegende Fläche 80 auf, die in Höhe der Schnittlinie 79 (Fig. 6) in etwa bündig mit der oberen radial außenliegenden Fläche 81 eines Reibbelages 82 der Bremsbacke 74 abschließt.

Fig. 8 zeigt die Teilbelag-Scheibenbremse 72 mit dem Gehäuse 75 und dem Gehäuseschenkel 76. Das Gehäuse 75 ist über Vorsprünge 77 und 78 auf Vorsprüngen 84 der Trägerplatte 73 der Bremsbacke 74 in Zweipunkt-Auflage abgestützt. Dazu weist das Gehäuse 75 zwei etwa senkrecht zueinander stehende Flächen 88,89 auf, die sich an senkrecht zueinander stehenden Flächen 90,91 des Vorsprunges 84 sowohl in radialer Richtung 92' als auch in Umfangsrichtung 93' abstützen. Auf der gegenüberliegenden, in Umfangsrichtung versetzten Seite weist der Vorsprung 78 Flächen 92,93 auf, die sich auf (wegen der Schnittdarstellung nicht dargestellten) Flächen der (in diesem Bereich nicht dargestellten) Bremsbacke 74 abstützen. Die (nicht dargestellten) Flächen der (in diesem Teil der Zeichnung nicht dargestellten) Bremsbacke 74 entsprechen den Flächen 94 und 95 des Vorsprunges 85 der kolbenseitigen Bremsbacke 87. Der Vorsprung 84 der äußeren Bremsbacke 74 weist eine Nut 96 mit gerundeten Vertiefungen 97,98 am Nutgrund 99 auf. Die Nut weist des weiteren Flächen 100 und 101 auf. Die Nut 96 formt einen Haken 102, der einen rechteckförmigen Vorsprung 103 umgreift. Der rechteckförmige Vorsprung 103 ist Bestandteil eines Tragarmes 104 eines integrierten Achsschenkels 105. Auf der gegenüberliegenden, in Umfangsrichtung versetzten Seite ragt der integrierte Achsschenkel 105 mit seinem Tragarm 106 und dem radial nach außen zeigenden Vorsprung 107 in eine Nut 108 mit runden Vertiefungen 109,110 an den Nutgrundenden eines Nutgrundes 111. Ein Haken 114 faßt über den Vorsprung 107. Die Nut weist des weiteren Flächen 112 und 113 auf, die senkrecht zum Nutgrund angeordnet sind. Bei Bremsbetätigung und Drehen der Bremsscheibe 3 in Richtung 93' wird zunächst die Fläche 112 der Nut gegen eine Fläche 115 des Vorsprunges 107 in Anlage gebracht, so daß die Umfangskraft von dem Tragarm 106 aufgenommen wird. Bei stärkerer Bremsbelastung wird des weiteren die Fläche 100 der Nut 96 auf der gegenüberliegenden Seite der Bremsbacke gegen eine Fläche 116 des Tragarmes 104 gebracht (Push-Pull-Prinzip). Die radial äußeren Flächen 80,81 des Reibbelags 82 und der Trägerplatte 73 verlaufen in Umfangsrichtung 93' etwa auf gleicher Höhe.

## Patentansprüche

1. Teilbelag-Scheibenbremse, insbesondere für Kraftfahrzeuge, mit einem Gehäuse (2), das eine Bremsscheibe (3) U-förmig umgreift und das eine Gehäusebrücke (20), einen ersten eine Kolben-Zylinder-Einheit (22,23) aufweisenden Gehäuseschenkel (24) und einen zweiten äußeren Gehäuseschenkel (25,76) aufweist, mit einer ersten eine Trägerplatte (4,86) aufweisenden Bremsbacke (5,87), die an dem ersten kolbenseitigen Gehäuseschenkel (24) angeordnet ist, wobei eine auf der Rückseite der Trägerplatte (4,86) befestigte erste Feder (38) in eine Ausnehmung (41) des Kolbens (22) eingreift, mit einer zweiten eine Trägerplatte (6,73) aufweisenden Bremsbacke (7,74), die an dem zweiten äußeren Gehäuseschenkel (25,76) angeordnet ist und das Gehäuse (2) in Bezug zur Bremsscheibenachse in radialer Richtung (92') abstützt, wobei eine auf der Rückseite der Trägerplatte (6,73) befestigte zweite Feder (42) an dem äußeren Gehäuseschenkel (25,76) gehalten ist, mit Vorsprüngen (8 bis 11, 84,85) an der Trägerplatte (4,6,73,86), die die Bremsbacke (5,7,74,87) in radialer und in Umfangsrichtung (71,92',93') an Tragarmen (57,58,104,106) eines als Bremsträger dienenden integrierten Achsschenkels (26,56,105) abstützt, wobei die Vorsprünge (8 bis 11, 84,85) an der Trägerplatte (4,6,73,86) der Bremsbacke (5,7,74,87) außerhalb des Bremsscheibenumfanges angeordnet sind, dadurch **gekennzeichnet,** daß beide Bremsbacken (5,7 bzw. 74,87) und beide Federn (38,42) gleich ausgeführt sind.

2. Teilbelag-Scheibenbremse nach Anspruch 1, dadurch **gekennzeichnet,** daß die Feder (38,42) drei Federarme (39,43,44) aufweist, wobei ein Federarmabschnitt (40,49) in radialer Richtung federnd nachgiebig und zwei Federarmabschnitte (48) in entgegengesetzte Umfangsrichtungen federnd nachgiebig angeordnet sind.

3. Teilbelag-Scheibenbremse nach Anspruch 2, dadurch **gekennzeichnet,** daß die drei Federarmabschnitte (48,49) der zweiten Feder (42) in drei Nuten (45,46) des äußeren Gehäuseschenkels (25) eingreifen.

4. Teilbelag-Scheibenbremse nach einem der Ansprüche 1 bis 3, dadurch **gekennzeichnet,** daß der Vorsprung (8 bis 11) L-Form aufweist, wobei ein erster Schenkel (65) des L sich mit einer ersten Fläche (66) in Umfangsrichtung (71) abstützt und ein zweiter Schenkel (62) des L sich mit einer zweiten Fläche (63) in radialer Richtung abstützt.

5. Teilbelag-Scheibenbremse nach einem der Ansprüche 1 bis 3, dadurch **gekennzeichnet,** daß der Vorsprung (84,85) eine Nut (96,108) aufweist, die die Trägerplatte (73,86) in radialer und in beiden Umfangsrichtungen (92',93') abstützt.

6. Teilbelag-Scheibenbremse nach Anspruch 4, dadurch **gekennzeichnet,** daß der Vorsprung (8 bis 11) eine Schräge (69) aufweist.

## Claims

1. A spot-type disc brake, in particular for automotive vehicles, with a housing (2) which straddles a brake disc (3) in a U-shaped manner and which is provided with a housing bridge (20), a first housing leg (24) having a piston-and-cylinder unit (22, 23) and with a second external leg (25, 76), comprising a first brake shoe (5, 87) having a carrier plate (4, 86) and being arranged on the first piston-side housing leg (24), wherein a first spring (38) secured to the back side of the carrier plate (4, 86) engages a recess (41) of the piston (22), comprising a second brake shoe (7, 74) which is provided with a carrier plate (6, 73) and is arranged on the second external housing leg (25, 76) and supports the housing (2) in the radial direction (92') in respect of the brake disc axis, with a second spring (42) secured to the back side of the carrier plate (6, 73) being retained on the external housing leg (25, 76), with projections (8 to 11, 84, 85) on the carrier plate (4, 6, 73, 86) which supports the brake shoe (5, 7, 74, 87) in the radial and in the circumferential directions (71, 92', 93') on carrying arms (57, 58, 104, 106) of an integrated steering knuckle (26, 56, 105) which serves as a brake carrier, the said projections (8 to 11, 84, 85) on the carrier plate (4, 6, 73, 86) of the brake shoe (5, 7, 74, 87) being arranged outside of the brake disc's circumference,
**characterized** in that both brake shoes (5, 7 and 74, 87, respectively) and both springs (38, 42) are of identical design.

2. A spot-type disc brake as claimed in claim 1,
**characterized** in that the spring (38, 42) comprises three spring arms (39, 43, 44), one spring arm section (40, 49) being arranged in a resiliently yielding manner in the radial direction, while two spring arm sections (48) are arranged in a resiliently yielding manner in opposite circumferential directions.

3. A spot-type disc brake as claimed in claim 2,
**characterized** in that the three spring arm sections (48, 49) of the second spring (42) engage three grooves (45, 46) of the external housing leg (25).

4. A spot-type disc brake as claimed in any one of the claims 1 to 3,
**characterized** in that the projection (8 to 11) has an L-shaped configuration, with a first leg (65) of the L supporting itself with a first surface (66) in the circumferential direction (71) and with a second leg (62) of the L supporting itself with a second surface (63) in the radial direction.

5. A spot-type disc brake as claimed in any one of the claims 1 to 3,
**characterized** in that the projection (84, 85) has a groove (96, 108) supporting the carrier plate (73, 86) in the radial direction and in both circumferential directions (92', 93').

6. A spot-type disc brake as claimed in claim 4,
**characterized** in that the projection (8 to 11) has a canted surface (69).

## Revendications

1. Frein à disque à garnitures partielles, notamment pour véhicules automobiles, comprenant un corps (2) qui enveloppe un disque (3) de frein en formant un U, et qui comporte un pont de liaison (20), une première patte (24) du corps contenant une unité (22, 23) de piston-cylindre, et une seconde patte extérieure (25, 76) de corps, comportant une première mâchoire de frein (5, 87) comprenant une plaque support de garniture (4, 86), qui est disposée du côté de la première patte (24) du corps, située du côté du piston, un premier ressort (38) fixé au dos de la plaque support (4, 86) s'engageant dans un évidement (41) du piston (22), comportant une seconde mâchoire de frein (7, 74) comprenant une plaque support (6, 73), qui est disposée du côté de la seconde patte (25, 76) du corps et qui supporte le corps (2) dans le sens radial (92') par rapport à l'axe du disque de frein, un second ressort (42) fixé au dos de la plaque support (6, 73) étant maintenu sur la seconde patte (25, 76) du corps, comprenant des saillies (8 à 11, 84, 85) situées au niveau de la plaque support (4, 6, 73, 86), la plaque mettant en appui la mâchoire de frein (5, 7, 74, 87), dans le sens radial et dans le sens de la circonférence (71, 92', 93'), sur des bras de support (57, 58, 104, 106) d'un bras de fusée intégré (26, 56, 105) servant de support de frein, les saillies (8 à 11, 84, 85) étant disposées sur la plaque support (4, 6, 73, 86) de la mâchoire de frein (5, 7, 74, 87), à l'extérieur de la circonférence du disque de frein, caractérisé en ce que les deux mâchoires de frein (5, 7, voire 74, 87) et les deux ressorts (38, 42) sont réalisés de façon identique.

2. Frein à disque à garnitures partielles selon la revendication 1, caractérisé en ce que le ressort (38, 42) présente trois branches (39, 43, 44) de ressort, une section (40, 49) de branche de ressort étant aménagée de façon à céder élastiquement dans le sens radial, et deux sections (48) de branche de ressort étant aménagées de manière à céder élastiquement dans deux sens circonférentiels opposés.

3. Frein à disque à garnitures partielles selon la revendication 2, caractérisé en ce que les trois sections (48, 49) de branche de ressort du second ressort (42) s'engagent dans trois rainures (45, 46) de la patte extérieure (25) du corps.

4. Frein à disque à garnitures partielles selon l'une des revendications 1 à 3, caractérisé en ce que la saillie (8 à 11) présente une forme en L, une première branche (65) du L prenant appui dans le sens circonférentiel (71) par l'intermédiaire d'une surface (66), et une seconde branche (62) du L prenant appui dans le sens radial par l'intermédiaire d'une seconde surface (63).

5. Frein à disque à garnitures partielles selon l'une des revendications 1 à 3, caractérisé en ce que la saillie (84, 85) présente une rainure (96, 108) qui soutient la plaquette support (73, 86) dans le sens radial et dans les deux sens circonférentiels (92', 93').

6. Frein à disque à garnitures partielles selon la revendication 4, caractérisé en ce que la saillie (8 à 11) présente un chanfrein (69).
